# EUROPEAN PATENT SPECIFICATION

(11) **EP 1 657 694 B1**
(45) Date of publication and mention of the grant of the patent: **18.03.2009**
(21) Application number: 05109914.1
(22) Date of filing: 24.10.2005
(51) Int. Cl.: G09F 13/16, G09F 13/22, G09F 13/14, G02B 6/00

(54) **Illuminated retroreflective sign**
Beleuchtetes Rückstrahlschild
Signe rétro-réfléchissant éclairé

(30) Priority: 12.11.2004 GB 0424937
(43) Date of publication of application: 17.05.2006
(73) Proprietor: 3M Innovative Properties Company, St. Paul MN 55144-1000 (US)
(72) Inventor: Pesenti, Marcella, B 1831, Diegem (BE)
(74) Representative: Hill, Cecilia Ann

(56) References cited:
- EP-A- 1 127 984
- EP-A- 1 477 368
- EP-A- 1 496 489
- FR-A- 2 744 519
- US-A- 5 667 289

## Description

The present invention relates to illuminated retroreflective signs, more especially signs that are used on roads and motorways to provide information to vehicle drivers.

Illuminated retroreflective traffic signs offer the advantage of enhanced visibility at night or in poor weather conditions because they can be seen even when they are out of the range of the headlights of approaching vehicles. Vehicle drivers thus perceive the signs earlier, which can be of particular importance on roads where vehicles travel at high speed. Any pedestrians on the roadway are also assisted, because the signs are visible even when there are no vehicles in the vicinity.

One construction tor an illuminated retroreflective sign is described in US-A-4 005 538. The sign comprises a box-like enclosure containing a plurality of tubular light sources (e.g. fluorescent tubes), the front of the enclosure comprising a layer of retrorecflective material on the outer side of which is a transparent sign face carrying a sign image.

It is important that the light sources of such signs should function reliably and censure effective illumination. However, for environmental and cost reasons, it is also highly desirable that the power consumption of the light sources should be as low as possible. Moreover, to simplify the installation of the signs (thereby further reducing custs and inconvenience to road users), it is also desirable that they should be as lightweight as possible and not required connection to a high voltage power supply.

The present invention has been made with those requirements in mind.

EP1127984 discloses an illuminated retroreflective sign comprising a light guide having opposed front and back faces, with a side face or side faces therebetween; and an array of equi-spaced light emittting elements arranged along a side face of the light guide to direct light into the latter; wherein the back face of the light guide comprises light extracting elements arranged thereon to cause light to be directed out of the light guide through the front face thereof; and the front face of the light guide comprises a light-transmissive retroreflective material.

EP-A-1 477 368, published after the claimed priority date of the present application, refers generally to an illuminated license plate for a vehicle in which an edge-lit hollow or solid light guide is utilized having two opposite front and back major faces and side faces therebetween. An elongate light source, which may comprise an array of light emitting elements, is arranged along at least a portion of at least one of the side faces of the light guide for emitting light into the light guide. A light-transmissive retroreflective film and indicia ace arranged in front of the front face of the light guide. Reference is made to the use of previously-known light extraction arrangements, including that described in WO-A-01/71248 in which the back face of a hollow light guide is a specularly-reflecting surface which carries diffusely-reflecting light-extraction elements.

The present invention provides a retroreflective illuminated sign as defined in the accompanying claim 1.

As used herein, the term "indicia" indicates means providing information (including pictorial information) to the viewer.

The use, in a sign in accordance with the invention, of a particular form of light guide illuminated by light-emitting diodes (LEDs) enables an effectively-illuminated sign to be provided using a comparatively small amount of energy and without the need for a high-voltage power supply. LEDs are known to have a comparatively long life without high maintenance requirements. Moreover, because a plurality of LEDs is used, the sign will continue to be illuminated even if one of the LEDs should fail. Through an appropriate design of the light-extraction elements on the rear face of the tight guide, the latter can be made comparatively thin, leading to substantial weight reduction and simplifying the handling and installation of the sign.

The effectiveness of the sign is further enhanced because the retroreflective material forms the front face of the sign, so that it is not covered by any additional layer of material that might distort the indicia when viewed under reflected light. Preferably, the indicia are applied directly on the external surface of the retroreflective material, for example by a printing process (which term includes not only conventional printing processes in which a printing medium (e.g. ink) is deposited on the retroreflective material by contacting it with a printing surface (e.g. a printing plate) but also processes in which the printing medium is projected onto the retroreflective material).

The effectiveness of the sign can also be enhanced if the light-extraction elements on the rear face of the light guide are symmetrically-arranged on the back face of the light guide with respect to an axis located mid-way between, and parallel to, opposed side faces of the light guide along which light-emitting diodes are arranged; adjacent light extraction elements being spaced at decreasing distances from each other in a direction away from light emoting diodes towards the axis of symmetry. It is especially advantageous if the arrangement of the light extraction elements on the rear face is determined as described in WO 02/230814.

In a particularly preferred construction of a sign in accordance with the invention, the front and back faces of the light guide are located in slots in an aluminium frame that provides the side walls of the light guide. The LEDs are positioned on the frame, which thus helps to provide optimum operating conditions by dissipating heat generated when the sign is illuminated.

The retroreflective material of a sign in accordance with the invention may be a cube-corner reflective material. The retroreflective material may be a film.

A sign constructed in accordance with the invention may have the following dimensions: the sides of the front face are at least 45cm long, the spacing between the front and back faces is less than 10cm, and the spacing between adjacent light-emitting diodes is at least 1cm.

By way of example, a traffic sign constructed in accordance with the invention will now be described with reference to the accompanying drawings, in which:
Fig. 1 is a diagrammatic exploded view of the basic components of the traffic sign;
Fig. 2 is a diagrammatic illustration of the arrangement of light-extraction elements on the back face of the traffic sign;
Fig. 3 is a diagrammatic exploded view of the components of the front face of the traffic sign, including an optional component;
Fig. 4 is a perspective view of part of one of the sides of a frame for the traffic sign;
Fig. 5 is a transverse cross-section of one of the sides of the frame; and
Fig. 6 is a diagrammatic illustration of an alternative arrangement of light-extraction elements on the back face of a traffic sign.

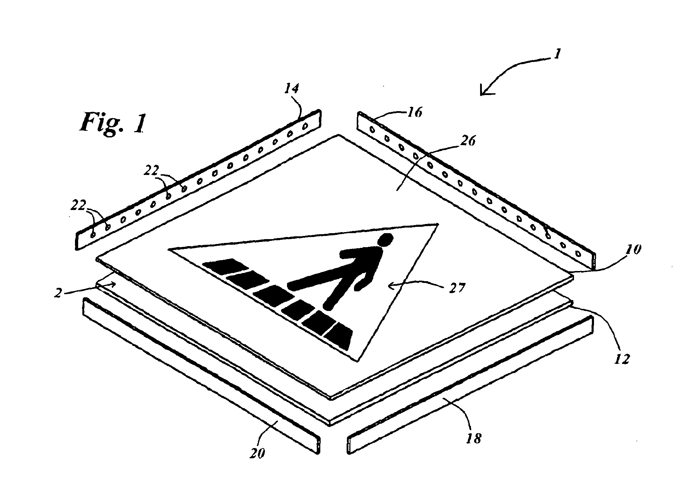

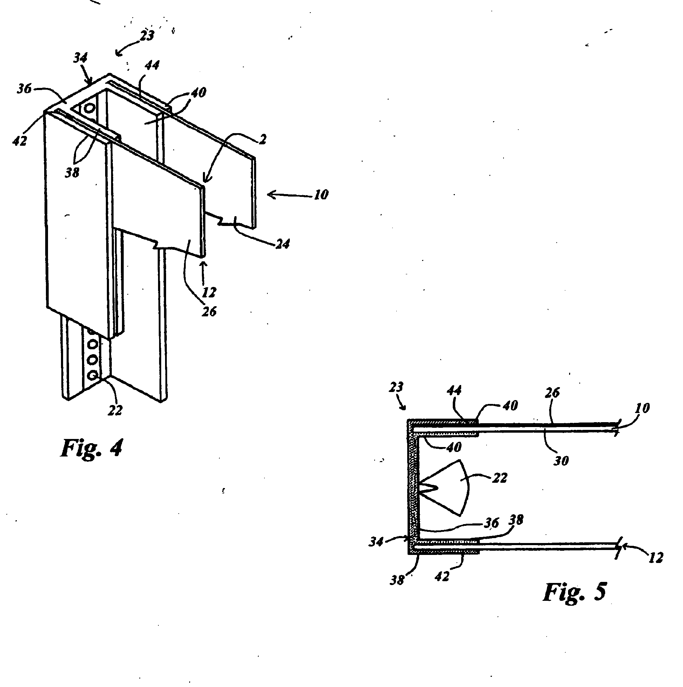

The traffic sign 1 illustrated in Figs. 1 to 5 of the drawing comprises a hollow light guide 2 having opposed, generally rectangular, major front and back faces 10, 12 with side faces 14, 16, 18, 20 extending between them. A plurality of equi-spaced light-emitting diodes (LEDs) 22, in the form of a linear array, is arranged along the internal surface of the side faces 14, 16, 18, 20 of the light guide to direct light into the latter. The components of the light guide are held together by a frame 23, as shown in Figs. 4 and 5 and described in greater detail below.

The internal surface of the back face 12 of the light guide comprises a specularly reflective material 24 having diffusely-reflecting light extraction elements 25 (not visible in Fig. 1) arranged thereon. If necessary, the specularly reflective material can be laminated to a suitable supporting sheet. The light-extraction elements 25 will be described in greater detail below.

The internal surfaces of the side faces 14, 16, 18, 20 of the light guide, also comprise a specularly reflective material, in this case aluminium plates in which the LEDs 22 are mounted.

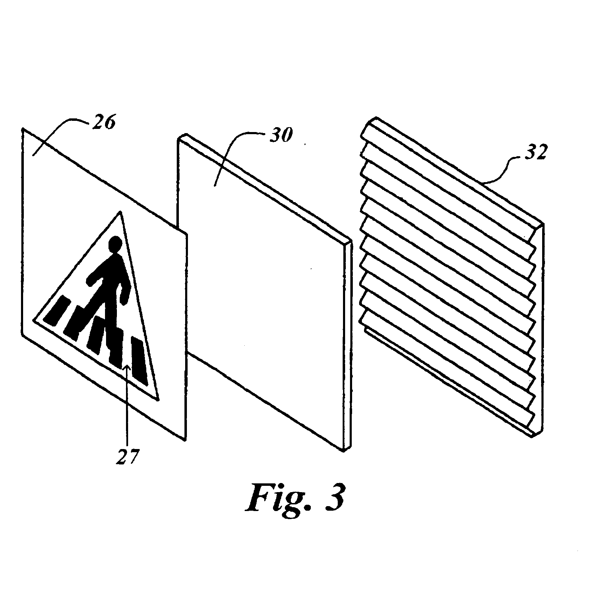

The front face 10 of the light guide comprises a light-transmissive retroreflective material 26 on which are applied indicia 27, providing the sign information. As illustrated, the indicia 27 are for a pedestrian crossing sign but it will be appreciated that any other traffic sign information could be applied to the retroreflective material. The indicia 27 are applied directly on the external surface of the retroreflective material 26, for example by printing using an ink that is resistant to ultraviolet light and to the weather conditions to which the sign will be exposed in use. If necessary, the retroreflective material 26 can be laminated on its inner side to a suitable, optically-transparent, supporting sheet 30 (see Fig. 3).

As so far described, the traffic sign 1 functions as follows. When the LEDs 22 are switched off, the indicia 27 on the front face of the sign will be visible to the drivers of approaching vehicles either under normal ambient light or as a result of light from the vehicle headlights being reflected back by the retroreflective material 26 of the front face 10. When the LEDs 22 are switched on, they direct light into the optical cavity of the light guide 2, where the light undergoes multiple reflections at the various faces until it strikes the front face 10 at an angle that allows it to leave the optical cavity by passing through the retroreflective material 26 thereby illuminating the front face of the sign 1. The light extraction elements 25 on the rear face 12 of the light guide 2 will diffusely-reflect any light that strikes them and are provided to enhance the amount of light that passes through the front face 10 of the light guide and also to improve the uniformity of the illumination of that face.

The specularly-reflective material 24 forming the internal surface of the back face 12 of the light guide 2 should have a reflectivity of at least 90% and, preferably, at least 98%. To reduce the amount of light lost through absorption, the specularly-reflective material is preferably a multi-layer optical film of the type described in US-A-5 882 774 or WO 97/01774. Preferred specularly-reflective materials are films available from 3M Company of St. Paul, Minnesota, U. S.A. under the trade designations "Radiant Mirror Film", "Vikuiti™ Enhanced Specular Reflector Film" and "Vikuiti™ HRVM High Reflectivity Visible Mirror Film". Typically, the film is laminated to a rigid supporting sheet, for example a sheet of aluminium or a polymeric material such as ABS, by means of an optically-transparent adhesive. Suitable adhesives are available from 3M Company of St. Paul, Minnesota, U.S.A. under one of the trade designations "8141", "8142", "8161" and "9483".

The light extraction elements 25 comprise an array of dots, typically circular in shape, printed in a diffusely-reflecting material on the back face 12 of the light guide 2. A suitable diffusely-reflecting material is matt white ink and it may be deposited on the specularly-reflecting material 24 of the back face 12 using any suitable printing process, including screen printing, gravure printing, offset printing and ink jet printing. Generally, the best printing quality is obtained using UV-cured inks applied by a screen printing process. As a less preferred alternative, the light extraction elements 25 could be printed on a transparent sheet that is then adhered to the specularly-reflective material 24 of the back face 12 of the light guide.

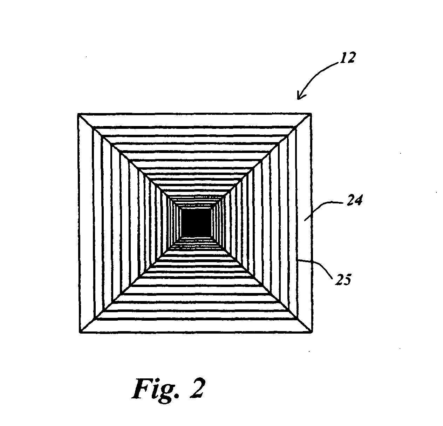

The use of light-extraction elements of various forms and in various arrangements to cause light to be emitted from light guides is well known but, in this case, the light extraction elements 25 are arranged in four sets of lines or stripes as illustrated in Fig. 2. It will be noted that the lines or stripes of extraction elements in each set are parallel to a respective one of the side faces 14, 16, 18, 20 of the light guide 2 (and thus to a respective one of the arrays of LEDs 22) but are spaced apart from each other by a distance that decreases in the direction away from the LEDs towards the centre ofthe back face 12. It will also be noted that, for each pair of opposed LED arrays, the lines or stripes of extraction elements are symmetrically arranged with respect to an axis located mid-way between, and parallel to, the side faces of the light guide on which those LEDs are arranged.

Preferably, the arrangement of the light extraction elements 25 required to achieve the desired illumination of the front face 10 of the light guide 2 is determined using a computer program as described in WO 02/23084, which also makes it possible to manufacture a silk screen for use in printing the light extraction elements on the back face 12 of the light guide as well as to determine the optimum arrangement and geometry of the LEDs 22 (the aim of the determination being to achieve an acceptable level of illumination of the front face 10 of the light guide with the minimum consumption of power). Typically, the LEDs used to illuminate the light guide have a power rating in the range 1 to 5 watts and are spaced at a distance in the range of from 10 to 20mm along the side faces 14, 16, 18, 20 of the light guide. Preferred LEDs have a 1.2 watt power rating and provide a batwing light distribution pattern, and are available from Lumileds Lighting of San Jose, California, U.S.A. under the trade designation "Luxeon Star".

Any suitable light-transmissive retroreflective material 26 can be used for the front face 10 of the light guide, especially any of those known for use in traffic signs. Suitable materials can be beaded, prismatic, or provided with cube corners, for example beaded materials as described in US-A-4 005 538 and cube corner materials as described in US-A-4 588 258. A particularly suitable material is a film available, under the trade designation "Scotchlite™ Diamond Grade™ Reflective Sheeting" from 3M Company of St. Paul, Minnesota, U.S.A. If necessary, the material 26 is laminated to an optically-transparent supporting sheet 30 (for example, a polycarbonate sheet), illustrated in Fig. 3, by means of an optically transparent adhesive, for example one of the adhesives mentioned above for use in the back face 12 of the light guide, or a stretch release adhesive of the type available, under the trade designation "VP 5290" from 3M Company of St. Paul, Minnesota, U.S.A. As mentioned above, the indicia 27 providing the traffic sign information are printed directly on the external surface of the retroreflective material 26: that arrangement prevents the creation of shadows on the face of the sign but, in a less preferred arrangement, the indicia could be applied to the other surface of the retroreflective material 26.

If necessary, in certain circumstances, a sheet 32 of light-transmitting film formed with prismatic microstructures may be arranged, with the prisms extending horizontally across the sign face, on the inside ofthe retroreflective material 26 (and the supporting sheet 30, when used) to increase the amount of light leaving the light guide and thus enhance the illumination of the retroreflective material. A suitable prismatic film is available under the trade designation "Optical Lighting Film" from 3M Company of St. Paul, Minnesota, U.S.A. The use of such a sheet 32 will make it possible to achieve a required level of illumination of the front face ofthe sign 1 using either fewer LEDs 22 or LEDs having a lower power rating, but can have the effect of imposing a degree of directionality on the light that is incident of the retroreflective material 26.

As mentioned above, Figs. 4 and 5 show how the various components of the light guide 2 are held together in a frame 23. The frame surrounds the four sides of the light guide 2 and, on each side, comprises an elongate metal profile 34 having a base 36 that provides the respective side face of the light guide and, along each longitudinal edge of the base, two pairs of upstanding walls 38, 40 which define parallel slots 42, 44 respectively. To form the light guide 2, the four profiles 34 that make up the frame 23 are mitred together, the back face 12 of the light guide is located in the set of slots 42, the front face 10 of the light guide 22 is located in the set of slots 44, and the diodes 22 (on their mounting plates, not shown) are located on the inner surface of the bases 36 ofthe profiles 34. The height of the upstanding walls 38, 40 of the profiles 34 should be less than the spacing between the LEDs 22 to avoid obscuring the LEDs along the adjacent sides of the light guide.

The metal profiles 34 of the frame 23 also function to dissipate heat from the LEDs 22 and, to that end, are preferably formed from aluminium (which will also help to minimize the weight of the traffic sign). The removal of heat helps to increase the life of the LEDs 22, and also decreases the risk of deformation of the front and back faces 10, 12 of the light guide 2.

It will be appreciated that the dimensions of the frame 23 determine the dimensions of the light guide 2, and are thus are determined by the required dimensions of the face 10 of the traffic sign 1. Typically, the face 10 will be required to have sides that are from 45 to 120cm long. In the case, for example, in which the face 10 of the traffic sign is required to have a square-shape with sides of 600mm in length, the configuration described above enables effective illumination of the front face to be achieved using a light guide 2 in which the spacing between the front and back faces 10, 12 is less than 25mm and the light source comprises, along each side of the light guide, 10 - 20 LEDs having a power rating in the range 1-5 watts.

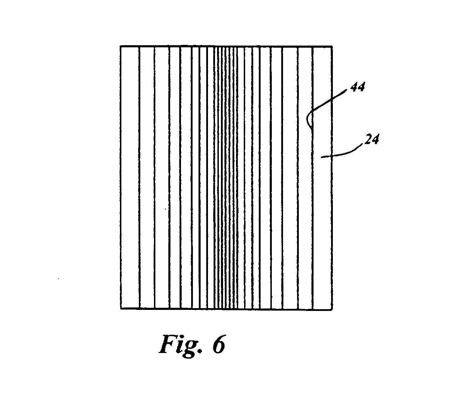

The traffic sign configuration described above with reference to Figs. 1 to 5 can be modified by using LEDs 22 along only two opposed sides of the light guide 2 (e.g. only the sides 14, 18 of Fig. 1). An arrangement of this type can enable effective illumination of the sign to be achieved particularly when the distance between those two opposed sides of the sign is not too large, for example less than 1000cm, and is particularly suitable for rectangular signs in which adjacent signs are of unequal length (in which case, the diodes would be located along the two longer sides). The other two side faces of the light guide are then covered in a specularly-reflecting material (for example, the same material that is used on the internal surface of the back face 12 of the light guide) and may, advantageously, be curved so that they reflect light back into the optical cavity of the light guide 2 in the optimum direction. In addition, the pattern of extraction elements 25 on the back face 12 of the light guide is modified to take the form of a set of lines or stripes 44 parallel to the opposed arrays of LEDs 22, as shown in Fig. 6. It will be noted that the spacing between the lines or stripes decreases, in a symmetrical manner, in the direction away from the LEDs on each side of the light guide towards the centre of the back face 12.

In the case of a traffic sign of small dimensions, for example 200cm x 200cm, it may be possible to achieve effective illumination with a linear array of LEDs along one side of the light guide 2 only. In that case, the pattern of extraction elements 25 will take the form of a set of lines or strips parallel to the LED array with the spacing between the lines or strips decreasing in the direction away from the LEDs towards the other side of the light guide.

A traffic sign constructed as described above and illustrated in the drawings can be powered by a 12v battery or even by a photovoltaic cell and is, accordingly, comparatively easy to install but nevertheless effective in operation due to the selection and configuration of the materials and components employed (including, for example, the spacing of the diodes 22, the arrangement of the light extraction elements 25 on the back face 12 of the light guide 2, and the application of the sign indicia 27 directly on the retroreflective material 26 which, it tum, forms the front face of the sign). The use of the aluminium frame 23 in the construction means that the sign is comparatively lightweight and easy to handle, and also helps to maximize the life of the diodes 22 by dissipating heat from within the sign.

Although the traffic signs described above with reference to the drawings are rectangular in shape, signs of other shapes could be configured in a similar manner. For example, a sign with a triangular front face could be configured with a linear array of LEDs along two of its sides, and a sign with a circular front face could be configured with equi-spaced LEDs around the whole of its circumference.

## Claims

1. An illuminated retroreflective sign (1) comprising:
a hollow light guide (2) having opposed front and back faces (10, 12) with a side face, or side faces (14,16,18,20), therebetween; and
an array of light emitting diodes (22) arranged along at least part of a side face of the light guide (2) to direct light into the latter;
wherein:
the back face (12) of the light guide (2) comprises a specularly-reflective material (24) having diffusely-reflective light extracting elements (25) arranged thereon to cause light to be directed out of the light guide (2) through the front face (10) thereof; and
the front face (10) of the light guide (2) comprises a light-transmissive retroflective material (26) and incorporates indicia (27);
**characterized in that**:
the light emitting diodes (22) are equi-spaced;
the light-transmissive retroreflective material (26) forms the front face of the sign (1); and the indicia (27) are applies directly on a surface of the retroreflective material.

2. A sign (1) as claimed in claim 1, in which the indicia (27) are applied on the external surface of the retroreflective material (26).

3. A sign (1) as claimed in claim 1 or claim 2, in which the indicia (27) are printed on the retroreflective material (26).

4. A sign (1) as claimed in any one of the preceding claims, in which the front face (10) of the light guide (2) comprises the retroreflective material (26) only.

5. A sign (1) as claimed in any one of claims 1 to 3, in which the front face (10) of the light guide (2) comprises the retroreflective material (26) mounted on a supporting sheet (30) of optionally-transparent material.

6. A sign (1) as claimed in any one of the preceding claims, in which the front and back faces (10, 12) of the light guide (2) are mounted in slots (44,42) in a frame (23) that provides the side faces (17, 16, 18, 20) of the light guide (2).

7. A sign (1) as claimed in claim 6, in which the light-emitting diodes (22) are located on the frame (23), the latter being formed of a heat-conducting material to dissipate heat generated by the diodes (22).

8. A sign (1) as claimed in any one of the preceding claims, in which the diffusely-reflective light extraction elements (25) are symmetrically arranged on the back face (12) of the light guide (2) with respect to an axis located mid-way between, and parallel to, opposed side faces of the light guide (2) along which light-emitting diodes (22) are arranged; adjacent light extraction elements (25) being spaced at decreasing distances from each other in a direction away from the light emitting diodes (22) towards the axis of symmetry.

9. A sign (1) as claimed in any one of the preceding claims, in which the front and back faces (10,12) of the light guide (2) are generally rectangular and light-emitting diodes (22) are arranged along two opposed side faces of the light guide (2).

10. A sign (1) as claimed in any one of claims 1 to 8, in which the front and back faces (10,12) of the light guide (2) are generally rectangular and light-emitting diodes (22) are arranged along the four side faces of the light guide (2).

## Patentansprüche

1. Beleuchtetes Rückstrahlschild (1), aufweisend:
einen hohlen Lichtleiter (2) mit einer Vorder- und Rückfläche (10, 12), die sich gegenüberliegen, mit einer dazwischenliegenden Seitenfläche oder Seitenflächen (14, 16, 18, 20); und
ein Array Leuchtdioden (22), die entlang mindestens einem Teil einer Seitenfläche des Lichtleiters (2) zum Lenken von Licht dort hinein angeordnet sind;
wobei:
die Rückfläche (12) des Lichtleiters (2) ein spiegelnd reflektierendes Material (24) aufweist, worauf diffus reflektierende Lichtextraktionselemente (25) angeordnet sind, damit Licht aus dem Lichtleiter (2) durch dessen Vorderfläche (10) herausgelenkt wird; und
die Vorderfläche (10) des Lichtleiters (2) ein lichttransmissives Rückstrahlmaterial (26) aufweist und Indizes (27) einbindet;
**dadurch gekennzeichnet, dass**
die Leuchtdioden (22) äquidistant sind;
das lichttransmissive Rückstrahlmaterial (26) die Vorderfläche des Schilds (1) bildet; und die Indizes (27) direkt auf eine Fläche des Rückstrahlmaterials aufgetragen sind.

2. Schild (1) nach Anspruch 1, bei dem die Indizes (27) auf die Außenfläche des Rückstrahlmaterials (26) aufgetragen sind.

3. Schild (1) nach Anspruch 1 oder 2, bei dem die Indizes (27) auf das Rückstrahlmaterial (26) aufgedruckt sind.

4. Schild (1) nach einem der vorhergehenden Ansprüche, bei dem die Vorderfläche (10) des Lichtleiters (2) nur das Rückstrahlmaterial (26) aufweist.

5. Schild nach einem der Ansprüche 1 bis 3, bei dem die Vorderfläche (10) des Lichtleiters (2) das Rückstrahlmaterial (26) aufweist, das auf einem Trägerbogen (30) optisch transparenten Materials angebracht ist.

6. Schild (1) nach einem der vorhergehenden Ansprüche, bei dem die Vorder- und Rückfläche (10, 12) des Lichtleiters (2) in Schlitzen (44, 42) in einem Rahmen (23) angebracht sind, der die Seitenflächen (17, 16, 18, 20) des Lichtleiters (2) bereitstellt.

7. Schild (1) nach Anspruch 6, bei dem sich die Leuchtdioden (22) an dem Rahmen (23) befinden, wobei dieser zur Ableitung von durch die Dioden (22) erzeugter Wärme aus einem wärmeleitenden Material gebildet ist.

8. Schild (1) nach einem der vorhergehenden Ansprüche, bei dem die diffus reflektierenden Lichtextraktionselemente (25) symmetrisch auf der Rückfläche (12) des Lichtleiters (2) mit Bezug auf eine Achse angeordnet sind, die sich halbwegs zwischen, und parallel zu, sich gegenüberliegenden Seitenflächen des Lichtleiters (2) befindet, entlang denen Leuchtdioden (22) angeordnet sind; wobei benachbarte Lichtextraktionselemente (25) mit abnehmender Distanz voneinander in einer Richtung weg von den Leuchtdioden (22) und in Richtung der Symmetrieachse angeordnet sind.

9. Schild (1) nach einem der vorhergehenden Ansprüche, bei dem die Vorder- und Rückseite (10, 12) des Lichtleiters (2) im Allgemeinen rechteckig sind und Leuchtdioden (22) entlang zwei gegenüberliegenden Flächen des Lichtleiters (2) angeordnet sind.

10. Schild (1) nach einem der Ansprüche 1 bis 8, bei dem die Vorder- und Rückseite (10, 12) des Lichtleiters (2) im Allgemeinen rechteckig sind und Leuchtdioden (22) entlang den vier Seitenflächen des Lichtleiters (2) angeordnet sind.

## Revendications

1. Signe rétro-réfléchissant éclairé (1), comprenant:
un guide de lumière creux (2) présentant des faces avant et arrière (10, 12) opposées, avec une face latérale ou plusieurs faces latérales (14, 16, 18, 20) entre celles-ci; et
un réseau de diodes électroluminescentes (22) agencées le long d'au moins une partie d'une face latérale du guide de lumière (2) pour diriger la lumière dans ce dernier;
dans lequel:
la face arrière (12) du guide de lumière (2) comprend une matière réfléchissant de façon spéculaire (24) comprenant des éléments d'extraction de lumière réfléchissant de façon diffuse (25) agencés sur celle-ci pour entraîner la lumière à être dirigée hors du guide de lumière (2) à travers la face avant (10) de celui-ci; et
la face avant (10) du guide de lumière (2) comprend une matière rétro-réfléchissante de transmission de lumière (26) et incorpore des indications (27);
**caractérisé en ce que**:
les diodes électroluminescentes (22) sont séparées par des intervalles réguliers;
la matière rétro-réfléchissante de transmission de lumière (26) forme la face avant du signe (1) ; et
les indications (27) sont appliquées directement sur une surface de la matière rétro-réfléchissante.

2. Signe (1) selon la revendication 1, dans lequel les indications (27) sont appliquées sur la surface externe de la matière rétro-réfléchissante (26).

3. Signe (1) selon la revendication 1 ou la revendication 2, dans lequel les indications (27) sont imprimées sur la matière rétro-réfléchissante (26).

4. Signe (1) selon l'une quelconque des revendications précédentes, dans lequel la face avant (10) du guide de lumière (2) comprend uniquement la matière rétro-réfléchissante (26).

5. Signe (1) selon l'une quelconque des revendications 1 à 3, dans lequel la face avant (10) du guide de lumière (2) comprend la matière rétro-réfléchissante (26) montée sur une feuille de support (30) constituée d'une matière optiquement transparente.

6. Signe (1) selon l'une quelconque des revendications précédentes, dans lequel les faces avant et arrière (10, 12) du guide de lumière (2) sont montées dans des fentes (44, 42) formées dans un cadre (23) qui procure les faces latérales (14, 16, 18, 20) du guide de lumière (2).

7. Signe (1) selon la revendication 6, dans lequel les diodes électroluminescentes (22) sont situées sur le cadre (23), ce dernier étant constitué d'une matière conductrice de la chaleur pour dissiper la chaleur générée par les diodes (22).

8. Signe (1) selon l'une quelconque des revendications précédentes, dans lequel les éléments d'extraction de lumière réfléchissant de façon diffuse (25) sont agencés de façon symétrique sur la face arrière (12) du guide de lumière (2) par rapport à un axe qui est situé à mi-chemin entre et parallèle à des faces latérales opposées du guide de lumière (2) le long desquelles des diodes électroluminescentes (22) sont agencées; les éléments d'extraction de lumière voisins (25) étant séparés par des distances décroissantes les uns par rapport aux autres dans le sens de l'éloignement par rapport aux diodes électroluminescentes (22) en direction de l'axe de symétrie.

9. Signe (1) selon l'une quelconque des revendications précédentes, dans lequel les faces avant et arrière (10, 12) du guide de lumière (2) sont essentiellement rectangulaires, et les diodes électroluminescentes (22) sont agencées le long de deux faces latérales opposées du guide de lumière (2).

10. Signe (1) selon l'une quelconque des revendications 1 à 8, dans lequel les faces avant et arrière (10, 12) du guide de lumière (2) sont essentiellement rectangulaires, et les diodes électroluminescentes (22) sont agencées le long des quatre faces latérales du guide de lumière (2).
